# EUROPÄISCHE PATENTANMELDUNG

(11) **EP 4 060 859 A1**
(43) Veröffentlichungstag der Anmeldung: **21.09.2022**
(21) Anmeldenummer: 22162818.3
(22) Anmeldetag: 17.03.2022
(51) Int. Cl.: H02J 7/02, B60L 53/53, B60L 53/54, H02J 15/00

(54) **VERSORGUNGSSTATION ZUM DEZENTRALEN BEREITSTELLEN EINES ERSTEN UND EINES ZWEITEN ENERGIELIEFERANTEN, STATIONENINFRASTRUKTUR SOWIE VERFAHREN ZUM BETREIBEN ZUMINDEST EINER VERSORGUNGSSTATION**

(30) Priorität: 18.03.2021 DE 102021106617
(71) Anmelder: Westnetz GmbH, 44139 Dortmund (DE)
(72) Erfinder: Noll, Dr. Theresa, 46236 Bottrop (DE); Ewering, Dietmar, 48565 Steinfurt (DE); Stabenau, Carsten, 58640 Iserlohn (DE)
(74) Vertreter: Bals & Vogel Patentanwälte PartGmbB

(57) **Zusammenfassung**

Die Erfindung betrifft eine Versorgungsstation (10) zum dezentralen Bereitstellen eines ersten und zweiten Energielieferanten (201, 202) zum Versorgen von mobilen Beförderungseinheiten (2) für einen Betrieb der mobilen Beförderungseinheiten (2), aufweisend ein Versorgungssystem (11) mit einer ersten Versorgungseinheit (11.1) zur Bereitstellung des ersten Energielieferanten (201) für mobile Beförderungseinheiten (2), und einer zweiten Versorgungseinheit (11.2) zur Bereitstellung des zweiten Energielieferanten (202) für mobile Beförderungseinheiten (2). Ferner betrifft die Erfindung eine Stationeninfrastruktur (1), sowie ein Verfahren (100).

## Beschreibung

Die Erfindung betrifft eine Versorgungsstation zum, insbesondere dezentralen, Bereitstellen eines ersten und eines zweiten Energielieferanten, insbesondere in Form von Wasserstoff und Strom, zum Versorgen von mobilen Beförderungseinheiten für einen Betrieb der mobilen Beförderungseinheiten, eine Stationeninfrastruktur sowie ein Verfahren zum Betreiben zumindest einer Versorgungsstation.

Versorgungsstationen in Form von Tankstellen zum Versorgen von mobilen Beförderungseinheiten, wie Fahrzeugen, sind aus dem Stand der Technik grundsätzlich bekannt. Dabei stellen Tankstellen häufig eine Vielzahl von Energielieferanten, wie z. B. Benzin, Erdgas oder Strom, bereit, damit Fahrzeuge unterschiedlicher Betriebsart aufgetankt und mobil betrieben werden können. Dabei ist es von Nachteil, dass bei einer einseitigen Nachfrage nach einem der Energielieferanten, dessen Vorrat schnell aufgebraucht sein kann, während die übrigen Energielieferanten noch im Übermaß vorrätig sind. In diesem Fall steht den mobilen Beförderungseinheiten der aufgebrauchte Energielieferant nicht mehr zur Verfügung, was beispielsweise in ländlichen Regionen zu einem Versorgungsengpass führen kann.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine Versorgungssicherheit zumindest eines, vorzugsweise von zumindest zwei oder genau zwei, Energielieferanten zu erhöhen.

Die voranstehende Aufgabe wird gelöst durch eine Versorgungsstation mit den Merkmalen des Anspruchs 1, eine Stationeninfrastruktur mit den Merkmalen des Anspruchs 9, sowie ein Verfahren mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Versorgungsstation beschrieben sind, selbstverständlich auch im Zusammenhang mit der erfindungsgemäßen Stationeninfrastruktur und/oder dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung ist eine Versorgungsstation zum, insbesondere dezentralen, Bereitstellen eines ersten und eines zweiten Energielieferanten zum Versorgen von mobilen Beförderungseinheiten für einen Betrieb der mobilen Beförderungseinheiten vorgesehen. Die Versorgungsstation weist ein Versorgungssystem mit einer ersten Versorgungseinheit zur Bereitstellung des ersten Energielieferanten für mobile Beförderungseinheiten und einer zweiten Versorgungseinheit zur Bereitstellung des zweiten Energielieferanten für mobile Beförderungseinheiten auf. Ferner ist vorgesehen, dass die Versorgungsstation ein mit dem Versorgungssystem verbundenes Umwandlungssystem mit einer ersten Umwandlungseinheit zum Erzeugen des ersten Energielieferanten aus dem zweiten Energielieferanten aufweist.

Die Versorgungsstation kann insbesondere als Tankstelle ausgebildet sein. Beispielsweise kann die Versorgungsstation dezentral in einer Region installiert sein. So können mehrere Versorgungsstationen die Versorgungssicherheit über eine weite Fläche erhöhen. Vorteilhafterweise kann die Versorgungsstation modular aufgebaut sein. Beispielsweise kann die Versorgungsstation um weitere Versorgungseinheiten und/oder Umwandlungseinheiten erweiterbar sein.

Bei den mobilen Beförderungseinheiten kann es sich vorzugsweise um Fahrzeuge handeln. Es ist jedoch ebenso denkbar, dass die mobilen Beförderungseinheiten Fluggeräte und/oder Schiffe umfassen. Ein Teil der Beförderungseinheiten kann zum Betrieb mit dem ersten Energielieferanten und ein anderer Teil der Beförderungseinheiten kann zum Betrieb mit dem zweiten Energielieferanten ausgebildet sein. Insbesondere kann das Versorgungssystem zum Bereitstellen des ersten und zweiten Energielieferanten zur Bereitstellung von Energie für eine Antriebsvorrichtung der mobilen Beförderungseinheiten, d.h. beispielsweise zum Laden einer Antriebsbatterie und/oder zum Befüllen eines Treibstofftanks, ausgestaltet sein.

Die Energielieferanten können beispielsweise einen Energieträger in Form eines thermisch, mechanisch und/oder chemisch verwertbaren Treibstoffes für die mobilen Beförderungseinheiten umfassen. Ferner ist es denkbar, dass zumindest einer der beiden Energielieferanten einen Energiestrom, wie Elektrizität, umfasst, durch welchen die Energie zu den Beförderungseinheiten transportierbar ist. Der erste und zweite Energielieferant können sich z. B. in der Energieart, wie z. B. einer Treibstoffart oder einer Energietransportart, unterscheiden. Vorzugsweise ist der erste Energielieferant einer ersten Energieart und der zweite Energielieferant einer zweiten Energieart zugeordnet. Die erste und zweite Versorgungseinheit können Zapf- und/oder Ladesäulen zur Abgabe des ersten bzw. zweiten Energielieferanten an die mobilen Beförderungseinheiten umfassen. Es ist denkbar, dass die Versorgungsstation weitere Versorgungseinheiten zum Bereitstellen weiterer Energielieferanten aufweist.

Die Umwandlungseinheit ist insbesondere zum Erzeugen des ersten Energielieferanten aus dem zweiten Energielieferanten durch Umwandeln und/oder Transformieren des zweiten Energielieferanten in den ersten Energielieferanten ausgebildet. Insbesondere kann das Umwandlungssystem zum Erzeugen des ersten Energielieferanten durch die erste Umwandlungseinheit in Abhängigkeit von einem Bedarf des ersten Energielieferanten, z. B. an der ersten Versorgungseinheit, ausgebildet sein. Dazu kann das Umwandlungssystem beispielsweise eine Umwandlungssteuereinheit aufweisen. Ferner kann es vorgesehen sein, dass beim Erzeugen des ersten Energielieferanten aus dem zweiten Energielieferanten Komponenten hinzugefügt und/oder entfernt werden. Somit kann unter dem Erzeugen des ersten Energielieferanten aus dem zweiten Energielieferanten insbesondere verstanden werden, dass der erste Energielieferant unter Verwendung des zweiten Energielieferanten erzeugt wird.

Durch die Umwandlungseinheit kann die Versorgungssicherheit des ersten Energielieferanten durch die Versorgungsstation, insbesondere im Umkreis der Versorgungsstation, erhöht werden. Wenn beispielsweise ein erhöhter Bedarf des ersten Energielieferanten durch die erste Versorgungseinheit erkennbar wird, kann parallel oder vorab der zweite Energielieferant genutzt werden, um den ersten Energielieferanten zu erzeugen und dadurch einen Engpass des ersten Energielieferanten zu verhindern. Insbesondere kann dadurch dynamisch auf verschiedene Versorgungssituationen reagiert werden.

Weiterhin kann bei einer erfindungsgemäßen Versorgungsstation vorteilhafterweise vorgesehen sein, dass das Umwandlungssystem eine zweite Umwandlungseinheit zum Erzeugen des zweiten Energielieferanten aus dem ersten Energielieferanten aufweist. Somit kann das Umwandlungssystem zur bidirektionalen Umwandlung und/oder Transformation der beiden Energielieferanten ausgebildet sein. Zusätzlich oder alternativ ist es denkbar, dass die erste Umwandlungseinheit zur bidirektionalen Umwandlung und/oder Transformation des ersten und zweiten Energielieferanten ausgebildet ist. Durch die bidirektionale Umwandlung kann somit in beide Richtungen auf einen gestiegenen Bedarf eines der beiden Energielieferanten reagiert werden. Sollte sich die Versorgungssituation alternierend ändern, kann somit sowohl ein erhöhter Bedarf des ersten, als auch ein erhöhter Bedarf des zweiten Energielieferanten jeweils ausgeglichen werden.

Weiterhin kann bei einer erfindungsgemäßen Versorgungsstation vorteilhafterweise vorgesehen sein, dass es sich bei dem ersten Energielieferanten um Wasserstoff und bei dem zweiten Energielieferanten um Strom handelt. Beispielsweise kann die erste Umwandlungseinheit einen Elektrolyseur, insbesondere in Form eines Proton-Exchange-Membrane-(PEM-)Elektrolyseurs, umfassen. Die zweite Umwandlungseinheit kann vorteilhafterweise ein Brennstoffzellensystem umfassen. Die zweite Versorgungseinheit kann vorzugsweise zumindest eine Schnellladesäule, insbesondere in Form einer HPC-Schnellladesäule, umfassen. Dadurch können die Beförderungseinheiten in kurzer Zeit mit Strom aufgeladen werden. Es ist jedoch ebenso denkbar, dass die zweite Versorgungseinheit zum Austausch von Batterien der Beförderungseinheiten ausgebildet ist. Insbesondere, wenn es sich bei dem Strom um Grünstrom, d.h. um Strom aus erneuerbaren Energien, handelt, kann somit auch grüner Wasserstoff durch die Versorgungsstation generierbar sein. Dadurch kann eine nachhaltige Versorgung erzielt werden. Gleichzeitig kann es gerade bei ökologisch erzeugten Energielieferanten zu Verfügbarkeitsschwankungen, z. B. aufgrund von wechselnden Wind- und/oder Sonnenbedingungen, kommen. Durch das Umwandlungssystem können derartige Verfügbarkeitsschwankungen zumindest teilweise oder vollständig ausgeglichen werden.

Es ist ferner bei einer erfindungsgemäßen Versorgungsstation denkbar, dass das Versorgungssystem ein Speichersystem mit einer ersten Speichereinheit zum Speichern des ersten Energielieferanten und/oder einer zweiten Speichereinheit zum Speichern des zweiten Energielieferanten umfasst. Die erste Speichereinheit kann vorteilhafterweise zumindest einen Wasserstofftank, beispielsweise in Form eines Silos, umfassen. Die zweite Speichereinheit kann zumindest einen Batteriespeicher umfassen. Das Speichersystem kann zumindest teilweise unterirdisch angelegt sein. Dadurch kann die benötigte Fläche der Versorgungsstation reduziert sein und das Speichersystem zumindest teilweise vor Umwelteinflüssen geschützt sein. Durch das Speichersystem kann ein autarker Betrieb der Versorgungsstation ermöglicht sein. Somit kann die Versorgungssicherheit beispielsweise bei einem Ausfall eines Versorgungsnetzsystems zumindest zeitweise sichergestellt sein. Ferner kann durch das Speichersystem eine Verfügbarkeit des ersten und/oder zweiten Energielieferanten vorab geplant werden. Wenn beispielsweise zu bestimmten Tageszeiten Bedarfsspitzen eines der beiden Energielieferanten erwartet werden, kann der jeweilige Energielieferant vorab erzeugt und im Speichersystem zwischengespeichert werden.

Weiterhin ist es bei einer erfindungsgemäßen Versorgungsstation denkbar, dass ein Verbindungssystem zur Anbindung der Versorgungsstation an zumindest ein Versorgungsnetzsystem zum Versorgen der Versorgungsstation und zumindest eines weiteren Abnehmers mit dem ersten und/oder zweiten Energielieferanten vorgesehen ist, wodurch der erste und/oder zweite Energielieferant durch die Versorgungsstation aus dem Versorgungsnetzsystem entnehmbar und/oder durch die Versorgungsstation in das Versorgungsnetzsystem einspeisbar ist. Insbesondere kann das Verbindungssystem mit dem Versorgungssystem und/oder dem Speichersystem der Versorgungsstation verbunden sein. Bei dem Versorgungsnetzsystem kann es sich um ein öffentliches Netz, wie z. B. ein Stromnetz, ein Rohrnetz, zur Beförderung von Erdgas und/oder Wasserstoff, handeln. Es ist jedoch ebenso denkbar, dass das Versorgungsnetzsystem zur Versorgung der Versorgungsstation und zumindest eines weiteren Abnehmers innerhalb einer geschlossenen Anlage ausgebildet ist. Unter dem Versorgungsnetzsystem kann im Sinne der vorliegenden Erfindung auch ein System aus Subnetzen verstanden werden, die zusammenhängen oder unabhängig voneinander betrieben werden. Vorzugsweise ist das Verbindungssystem zur Anbindung der Versorgungsstation an zumindest zwei Versorgungsnetze, d. h. insbesondere zum Anschluss an je ein Versorgungsnetz für den ersten und zweiten Energielieferanten, ausgebildet. Das Verbindungssystem kann einen elektrischen Verbinder zum Anschluss an ein Stromnetz und/oder einen Rohranschluss an ein Rohrnetz umfassen. Durch die Anbindung an das Versorgungsnetzsystem kann somit eine ständige Bereitstellung zumindest eines der Energielieferanten ermöglicht sein. Beispielsweise wenn es sich bei dem Versorgungsnetzsystem um ein Stromnetz handelt, kann der entnommene Strom durch das Versorgungssystem den mobilen Beförderungseinheiten bereitgestellt werden und in Abhängigkeit von einem Bedarf an Wasserstoff genutzt werden, um Wasserstoff zu erzeugen. Dadurch kann die Versorgungssicherheit für die Wasserstoffversorgung erhöht werden. Ferner kann eine Rückspeisung in das Versorgungsnetzsystem erfolgen, wenn ein Überschuss eines der beiden Energielieferanten vorliegt. Dadurch kann die Versorgungssicherheit sogar im Versorgungsnetzsystem erhöht werden. Ferner ist es denkbar, dass durch das Einspeisen ein Teil der durch die Versorgungsstation erzeugten Energielieferanten regionalen Mobilitäts- und/oder Industrieanwendungen über das Versorgungsnetzsystem zur Verfügung gestellt wird.

Es ist ferner bei einer erfindungsgemäßen Versorgungsstation denkbar, dass das Verbindungssystem zumindest eine Einspeiseeinheit zur Anpassung eines Betriebsparameters des ersten und/oder zweiten Energielieferanten zur Einspeisung des ersten und/oder zweiten Energielieferanten in das Versorgungsnetzsystem aufweist. Vorzugsweise weist das Verbindungssystem eine erste Einspeiseeinheit zur Anpassung eines Betriebsparameters des ersten Energielieferanten zur Einspeisung des ersten Energielieferanten in ein Versorgungsnetzsystem des ersten Energielieferanten und/oder eine zweite Einspeiseeinheit zur Anpassung eines Betriebsparameters des zweiten Energielieferanten zur Einspeisung des zweiten Energielieferanten in ein Versorgungsnetzsystem des zweiten Energielieferanten auf. Durch die erste und/oder zweite Einspeiseeinheit kann der Betriebsparameter des ersten und/oder zweiten Energielieferanten an einen Betriebsparameter des Versorgungsnetzsystems angeglichen werden. Vorteilhafterweise kann die erste Einspeiseeinheit einen Verdichter zum Verdichten von Wasserstoff auf eine Druckstufe eines Versorgungsnetzsystems umfassen. Die zweite Einspeiseeinheit kann beispielsweise einen Transformator zum Anpassen des Stromes an eine Netzspannung eines Versorgungsnetzsystems umfassen. Dadurch kann die Rückspeisung des ersten und/oder zweiten Energielieferanten in das jeweilige Versorgungsnetzsystem direkt an der Versorgungsstation erfolgen, wodurch die Versorgungssicherheit des jeweiligen Versorgungsnetzsystems erhöht werden kann. Ferner können dadurch überschüssige Mengen der beiden Energielieferanten anderweitig im Versorgungsnetzsystem genutzt werden.

Ferner ist es bei einer erfindungsgemäßen Versorgungsstation denkbar, dass das Umwandlungssystem zumindest eine weitere Umwandlungseinheit in Form eines Methanisierungsmoduls zur Erzeugung von synthetischem Erdgas, d.h. insbesondere von Synthetic Natural Gas (SNG), umfasst. Beispielsweise kann durch das Methanisierungsmodul das synthetische Erdgas aus Wasserstoff erzeugt werden. Zusätzlich oder alternativ kann es sich bei dem ersten und/oder zweiten Energielieferanten um synthetisches Erdgas und bei der zweiten und/oder ersten Umwandlungseinheit um ein Methanisierungsmodul handeln. Durch das Methanisierungsmodul kann insbesondere zumindest eine CO2-Quelle zur Erzeugung des synthetischen Erdgases genutzt werden. Dies kann beispielsweise dann von besonderem Vorteil sein, wenn ein Anschluss der ersten Versorgungseinheit mit Wasserstoff an ein Versorgungsnetz zum Transport von Erdgas nicht möglich ist. Zusätzlich oder alternativ ist es weiterhin denkbar, dass eine Einspeiseeinheit des Verbindungssystems als Methanisierungsmodul zur Erzeugung von synthetischem Erdgas ausgebildet ist.

Es ist ferner bei einer erfindungsgemäßen Versorgungsstation denkbar, dass ein Generatorsystem zum Erzeugen des ersten und/oder zweiten Energielieferanten durch eine Fremdenergie vorgesehen ist, wobei das Generatorsystem mit dem Versorgungssystem, insbesondere dem Speichersystem, und/oder dem Verbindungssystem verbunden ist. Die Fremdenergie kann beispielsweise aus einer Windkraft und/oder einer Sonneneinstrahlung erhalten werden. Beispielsweise kann das Generatorsystem eine Windkraftanlage und/oder eine Photovoltaik-Anlage umfassen. Dadurch kann beispielsweise der zweite Energielieferant direkt an der Versorgungsstation autark erzeugt werden, während der erste Energielieferant durch das Umwandlungssystem erzeugbar ist. Somit kann eine vollständig autarke Versorgung der Versorgungsstation ermöglicht sein. Ferner kann durch das Generatorsystem bei einem Ausfall eines Versorgungsnetzsystems, beispielsweise in einem Schwarzfall und/oder einem Inselnetzfall, die Versorgung der Beförderungseinheiten durch die Versorgungsstation aufrechterhalten werden. Ferner kann das Versorgungsnetzsystem durch Rückspeisung stabilisiert werden.

Es ist ferner bei einer erfindungsgemäßen Versorgungsstation denkbar, dass eine Überwachungseinheit zum Überwachen des Speichersystems und/oder des Versorgungsnetzsystems hinsichtlich einer Verfügbarkeit des ersten und/oder zweiten Energielieferanten vorgesehen ist, insbesondere wobei die Versorgungsstation, insbesondere die Überwachungseinheit, ein Steuermodul zum Ansteuern des Umwandlungssystems und/oder des Verbindungssystems in Abhängigkeit von der Verfügbarkeit aufweist. Die Überwachungseinheit umfasst vorzugsweise eine oder mehrere Messeinheiten zum Erfassen von zumindest einer Kenngröße des ersten und/oder zweiten Energielieferanten im, insbesondere jeweiligen, Versorgungsnetzsystem. Beispielsweise kann durch die Überwachungseinheit eine Spannung, eine Frequenz, eine Wirk- und/oder eine Blindleistung, ein Volumenstrom und/oder ein Druck im Versorgungsnetzsystem, insbesondere in mehreren Versorgungsnetzen, erfassbar sein. Wird eine unregelmäßige Verfügbarkeitssituation, wie beispielsweise ein Über- oder Unterbedarf eines der beiden Energielieferanten, im Versorgungsnetzsystem festgestellt, kann durch Rückspeisung oder Entnahme des ersten und/oder zweiten Energielieferanten das Versorgungsnetzsystem stabilisiert werden. Somit kann durch die Überwachungseinheit die Versorgungssicherheit erhöht werden. Das Steuermodul kann beispielsweise einen Prozessor und/oder Mikroprozessor umfassen. Durch das Ansteuern des Umwandlungssystems kann das Speichersystem genutzt werden, um die Versorgungssituation zu verbessern.

Weiterhin kann bei einer erfindungsgemäßen Versorgungsstation vorgesehen sein, dass die Versorgungsstation, vorzugsweise die Überwachungseinheit, eine Kommunikationsschnittstelle zur Kommunikation mit den mobilen Beförderungseinheiten aufweist. Dadurch kann insbesondere ein Flottenmanagement zumindest teilweise durch die Versorgungsstation erfolgen. Beispielsweise kann vorgesehen sein, dass das Steuermodul der Versorgungsstation mit der Kommunikationsschnittstelle verbunden ist, um das Umwandlungssystem und/oder das Verbindungssystem in Abhängigkeit von der Kommunikation mit den mobilen Beförderungseinheiten anzusteuern. So ist es denkbar, dass in einer Situation ein Großteil der mobilen Beförderungseinheiten einen der Energieträger benötigt. Durch die Kommunikationsschnittstelle können die mobilen Beförderungseinheiten dies frühzeitig an die Versorgungsstation melden, so dass der erste und/oder zweite Energieträger erzeugt werden kann.

Ferner kann bei einer erfindungsgemäßen Versorgungsstation vorgesehen sein, dass die Versorgungsstation, vorzugsweise die Überwachungseinheit, eine Meteorologieschnittstelle zur Sammlung meteorologischer Informationen aufweist. Die meteorologischen Informationen können beispielsweise von externen Datenquellen, wie einem Server, abgerufen und/oder durch eigene Messungen gesammelt werden. Insbesondere kann die Metereologieschnittstelle zum Durchführen meteorologischer Messungen und/oder zum Erstellen meteorologischer Vorhersagen ausgebildet sein. Die Meteorologieschnittstelle kann mit dem Steuermodul der Versorgungsstation verbunden sein, um das Umwandlungssystem und/oder das Verbindungssystem in Abhängigkeit von den meteorologischen Informationen mit den mobilen Beförderungseinheiten anzusteuern. Dadurch kann eine vorausschauende Betriebsweise der Versorgungsstation in Abhängigkeit von den meteorologischen Verhältnissen ermöglicht sein. Beispielsweise kann anhand der meteorologischen Informationen vorausbestimmt werden, ob mit einer für einen prognostizierten Bedarf ausreichenden Energiemenge durch Wind und/oder Sonneneinstrahlung, z.B. zur Produktion von Elektrizität, gerechnet werden kann.

Gemäß einem weiteren Aspekt der Erfindung ist eine Stationeninfrastruktur vorgesehen. Die Stationeninfrastruktur weist zumindest zwei erfindungsgemäße Versorgungsstationen zum, insbesondere dezentralen, Bereitstellen eines ersten und eines zweiten Energielieferanten und zumindest ein Versorgungsnetzsystem zum Versorgen der Versorgungsstationen mit dem ersten und/oder zweiten Energielieferanten auf. Die Versorgungsstationen sind über eine Datenverbindung zur Abstimmung einer Bereitstellung des ersten und zweiten Energielieferanten miteinander verbunden.

Somit bringt eine erfindungsgemäße Stationeninfrastruktur die gleichen Vorteile mit sich, wie sie bereits ausführlich mit Bezug auf eine erfindungsgemäße Versorgungsstation beschrieben worden sind. Bei der Datenverbindung kann es sich um eine direkte Datenverbindung zwischen den Versorgungsstationen handeln. Es ist jedoch ebenso denkbar, dass die Datenverbindung über eine zentrale Leitstelle und/oder einen zentralen Server erfolgt. Durch die Datenverbindung zwischen den zumindest zwei Versorgungsstationen kann eine Verfügbarkeitssituation in einem größeren Gebiet abgestimmt und verbessert werden. Ist es bei einer der Versorgungsstationen beispielsweise erforderlich, dass ein Wasserstoffvorrat zunächst erhöht wird, können Beförderungseinheiten zu der jeweils anderen Versorgungsstation umgeleitet werden. Ferner ist es denkbar, dass zum Ausgleich von Schwankungen der Versorgungssituation im Versorgungsnetzsystem durch die Versorgungsstationen eine gewichtete Rückspeisung und/oder Entnahme des jeweiligen Energielieferanten in Abhängigkeit von der lokalen Verfügbarkeit der Energielieferanten an den Versorgungsstationen erfolgt. Somit kann durch die Stationeninfrastruktur beispielsweise eine überregionale Versorgungssicherheit weiter verbessert werden.

Weiterhin ist es bei einer erfindungsgemäßen Stationeninfrastruktur denkbar, dass die Stationeninfrastruktur ein Überwachungssystem zum Ermitteln eines Ist-Verfügbarkeitszustandes des ersten und zweiten Energielieferanten für die Versorgungsstationen und für das Versorgungsnetzsystem, und ein Steuersystem zum Bestimmen eines Soll-Verfügbarkeitszustandes für die Versorgungsstationen und für das Versorgungsnetzsystem und zum Ansteuern der Versorgungsstationen zum Herstellen des Soll-Verfügbarkeitszustandes aufweist. Vorzugsweise können Überwachungseinheiten der Versorgungsstationen in das Überwachungssystem integriert sein. Zum Ermitteln des Ist-Verfügbarkeitszustandes kann eine Kenngröße des ersten und/oder zweiten Energielieferanten im Versorgungsnetzsystem ermittelt werden. Das Steuersystem kann mehrere verteilte Steuermodule der Versorgungsstationen und/oder eine zentrale Steuereinheit umfassen. Insbesondere kann durch das Steuersystem der Verfügbarkeitszustand regelbar sein. Somit kann durch das Steuersystem ein Energiemanagementsystem gebildet sein. Dadurch kann auf unterschiedliche Verfügbarkeitszustände durch die Stationeninfrastruktur dynamisch reagiert werden. Insbesondere können dadurch Lastspitzen und/oder Bedarfsspitzen an den Versorgungsstationen und/oder in dem zumindest einen Versorgungsnetzsystem ausgeglichen werden. Dadurch kann die Versorgungssicherheit insgesamt, d.h. insbesondere lokal sowie überregional, verbessert werden. Ferner kann dadurch ermöglicht werden, dass dies einen Netzausbau ersetzt oder der Netzausbau dadurch kleiner dimensioniert werden kann.

Die Systeme, d. h. insbesondere das Versorgungssystem, das Umwandlungssystem, das Speichersystem, das Verbindungssystem, das Generatorsystem, das Überwachungssystem und/oder das Steuersystem, und/oder die Einheiten, d. h. insbesondere die Versorgungseinheiten, die Umwandlungseinheiten, die Speichereinheiten und/oder die Einspeiseeinheiten, können als bauliche Einheit oder aus baulich getrennten Komponenten ausgebildet sein.

Gemäß einem weiteren Aspekt der Erfindung ist ein Verfahren zum Betreiben zumindest einer Versorgungsstation, insbesondere einer erfindungsgemäßen Versorgungsstation, zum, insbesondere dezentralen, Bereitstellen eines ersten und eines zweiten Energielieferanten zum Versorgen von mobilen Beförderungseinheiten für einen Betrieb der mobilen Beförderungseinheiten vorgesehen. Dabei werden durch die Versorgungsstation folgende Schritte ausgeführt:
- Bereitstellen des ersten Energielieferanten für mobile Beförderungseinheiten, insbesondere durch eine erste Versorgungseinheit eines Versorgungssystems der Versorgungsstation,
- Bereitstellen des zweiten Energielieferanten für mobile Beförderungseinheiten, insbesondere durch eine zweite Versorgungseinheit des Versorgungssystems der Versorgungsstation,
- Erzeugen des ersten Energielieferanten aus dem zweiten Energielieferanten, insbesondere durch eine erste Umwandlungseinheit eines Umwandlungssystems der Versorgungsstation.

Somit bringt ein erfindungsgemäßes Verfahren die gleichen Vorteile mit sich, wie sie bereits ausführlich mit Bezug auf eine erfindungsgemäße Versorgungsstation und/oder eine erfindungsgemäße Stationeninfrastruktur beschrieben worden sind. Vorzugsweise kann ferner ein Erzeugen des zweiten Energielieferanten aus dem ersten Energielieferanten ausgeführt werden. Dadurch kann eine bidirektionale Umwandlung und/oder Transformation der beiden Energielieferanten erfolgen, um wechselseitig Bedarfe auszugleichen. Das Bereitstellen des ersten und zweiten Energielieferanten kann beispielsweise ein Vorhalten und/oder ein Abgeben des ersten und zweiten Energielieferanten an die mobilen Beförderungseinheiten umfassen. Durch das Erzeugen des ersten Energielieferanten kann eine Versorgungssicherheit des ersten Energielieferanten verbessert sein. Ferner können beispielsweise Lastspitzen des zweiten Energielieferanten durch das Erzeugen des ersten Energielieferanten aus dem zweiten Energielieferanten aufgefangen werden.

Vorzugsweise kann bei einem erfindungsgemäßen Verfahren vorgesehen sein, dass der erste und/oder zweite Energielieferant zum Bereitstellen durch die Versorgungsstation in einem Speichersystem der Versorgungsstation vorgehalten wird. Somit kann eine Verfügbarkeit des ersten und/oder zweiten Energielieferanten vorgeplant werden. Insbesondere kann das Speichersystem mit dem ersten und/oder zweiten Energielieferanten vorausschauend gefüllt werden. Ferner ist es denkbar, dass ein Bedarf eines der beiden Energielieferanten in Abhängigkeit von einem Füllstand und/oder Ladezustand des Speichersystems ermittelt werden. So ist es denkbar, dass das Erzeugen des ersten Energielieferanten aus dem zweiten Energielieferanten durchgeführt wird, wenn ein Mindestfüllstand und/oder Mindestladezustand einer ersten Speichereinheit des Speichersystems zum Speichern des ersten Energielieferanten erreicht oder unterschritten wird. Ferner kann umgekehrt vorgesehen sein, dass das Erzeugen des zweiten Energielieferanten aus dem ersten Energielieferanten durchgeführt wird, wenn ein Mindestfüllstand einer zweiten Speichereinheit des Speichersystems zum Speichern des zweiten Energielieferanten erreicht oder unterschritten wird. Insbesondere bei einer bidirektionalen Umwandlung der beiden Energielieferanten kann der erste Energielieferant als Zwischenspeicher für den zweiten Energielieferanten dienen. Durch das Vorhalten des ersten und/oder zweiten Energiespeichers im Speichersystem kann eine, insbesondere von einem Versorgungsnetzsystem unabhängige, Versorgungssicherheit ermöglicht werden.

Weiterhin ist es bei einem erfindungsgemäßen Verfahren denkbar, dass die Versorgungsstation mit zumindest einem Versorgungsnetzsystem verbunden ist. Das Versorgungsnetzsystem dient zum Versorgen der Versorgungsstation und zumindest eines weiteren Abnehmers mit dem ersten und/oder zweiten Energielieferanten. Vorzugsweise umfasst das Verfahren dabei zumindest einen oder sämtliche der folgenden Schritte:
- Entnehmen des ersten und/oder zweiten Energielieferanten aus dem Versorgungsnetzsystem, insbesondere durch ein Verbindungssystem der Versorgungsstation,
- Einspeisen des ersten und/oder zweiten Energielieferanten in das Versorgungsnetzsystem, insbesondere durch das Verbindungssystem.
Vorzugsweise kann die Versorgungsstation mit einem Versorgungsnetz zum Versorgen der Versorgungsstation und zumindest eines weiteren Abnehmers mit dem ersten Energielieferanten und mit einem anderen Versorgungsnetz zum Versorgen der Versorgungsstation und zumindest eines weiteren Abnehmers mit dem zweiten Energielieferanten verbunden sein. Es kann vorgesehen sein, dass ein Betriebsparameter des ersten und/oder zweiten Energielieferanten beim Einspeisen in das Versorgungsnetzsystem, insbesondere durch eine erste und/oder zweite Einspeiseeinheit der Versorgungsstation, angepasst wird. Beispielsweise, wenn es sich bei dem ersten Energielieferanten um Wasserstoff handelt, kann der erste Energielieferant verdichtet werden. Wenn es sich bei dem zweiten Energielieferanten um einen Strom handelt, kann beispielsweise eine Spannung des zweiten Energielieferanten an das Versorgungsnetzsystem angeglichen werden.

Weiterhin ist es bei einem erfindungsgemäßen Verfahren denkbar, dass das Verfahren folgenden Schritt umfasst:
- Überwachen des Speichersystems der Versorgungsstation und/oder des Versorgungsnetzsystems hinsichtlich einer Verfügbarkeit des ersten und/oder zweiten Energielieferanten, insbesondere durch eine Überwachungseinheit der Versorgungsstation,
vorzugsweise wobei das Erzeugen des ersten Energielieferanten aus dem zweiten Energielieferanten in Abhängigkeit von der Verfügbarkeit erfolgt. Dazu kann ein Füllstand und/oder Ladezustand des Speichersystems und/oder eine Kenngröße des Versorgungsnetzsystems überwacht werden. Das Erzeugen des ersten Energielieferanten aus dem zweiten Energielieferanten kann insbesondere dann erfolgen, wenn ein Mindestfüllstand und/oder ein Mindestladezustand erreicht ist. Weiterhin kann vorgesehen sein, dass das Erzeugen des zweiten Energielieferanten aus dem ersten Energielieferanten in Abhängigkeit von der Verfügbarkeit erfolgt. Somit kann frühzeitig auf eine sinkende Verfügbarkeit des ersten und/oder zweiten Energielieferanten reagiert werden, um die Versorgungssicherheit zu erhöhen.

Es ist ferner bei einem erfindungsgemäßen Verfahren denkbar, dass die Versorgungsstation als Teil einer das Versorgungsnetzsystem und zumindest eine weitere Versorgungsstation umfassenden Stationeninfrastruktur, insbesondere einer erfindungsgemäßen Stationeninfrastruktur, mit der weiteren Versorgungsstation über eine Datenverbindung zur Abstimmung einer Bereitstellung des ersten und zweiten Energielieferanten verbunden ist, insbesondere wobei das Verfahren folgende Schritte umfasst:
- Ermitteln eines Ist-Verfügbarkeitszustandes des ersten und zweiten Energielieferanten für die Versorgungsstationen und für das Versorgungsnetzsystem, insbesondere durch ein Überwachungssystem der Stationeninfrastruktur,
- Bestimmen eines Soll-Verfügbarkeitszustandes für die Versorgungsstationen und für das Versorgungsnetzsystem, insbesondere durch ein Steuersystem der Stationeninfrastruktur,
- Ansteuern der Versorgungsstationen zum Herstellen des Soll-Verfügbarkeitszustandes, insbesondere durch das Steuersystem und/oder in Abhängigkeit von einem Vergleich des Soll-Verfügbarkeitszustandes und des Ist-V erfügbarkeitszustandes.
Insbesondere können die Versorgungsstationen zum Erzeugen des ersten und/oder zweiten Energielieferanten angesteuert werden. Ferner können die Versorgungsstationen zum Einspeisen des ersten und/oder zweiten Energielieferanten in das Versorgungsnetzsystem und/oder zum Entnehmen des ersten und/oder zweiten Energielieferanten aus dem Versorgungsnetzsystem angesteuert werden. Zum Ermitteln des Ist-Verfügbarkeitszustandes kann eine Kenngröße des Versorgungsnetzsystems an einer Versorgungsstation oder an mehreren Versorgungsstationen ermittelt werden. Beispielsweise kann ein Mittelwert mehrerer ermittelter Kenngrößen gebildet werden oder die Kenngrößen können miteinander verglichen werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine erfindungsgemäße Versorgungsstation in schematischer Darstellung,
- Figur 2: eine erfindungsgemäße Stationeninfrastruktur mit zwei Versorgungsstationen,
- Figur 3: ein erfindungsgemäßes Verfahren zum Betreiben zumindest einer Versorgungsstation.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

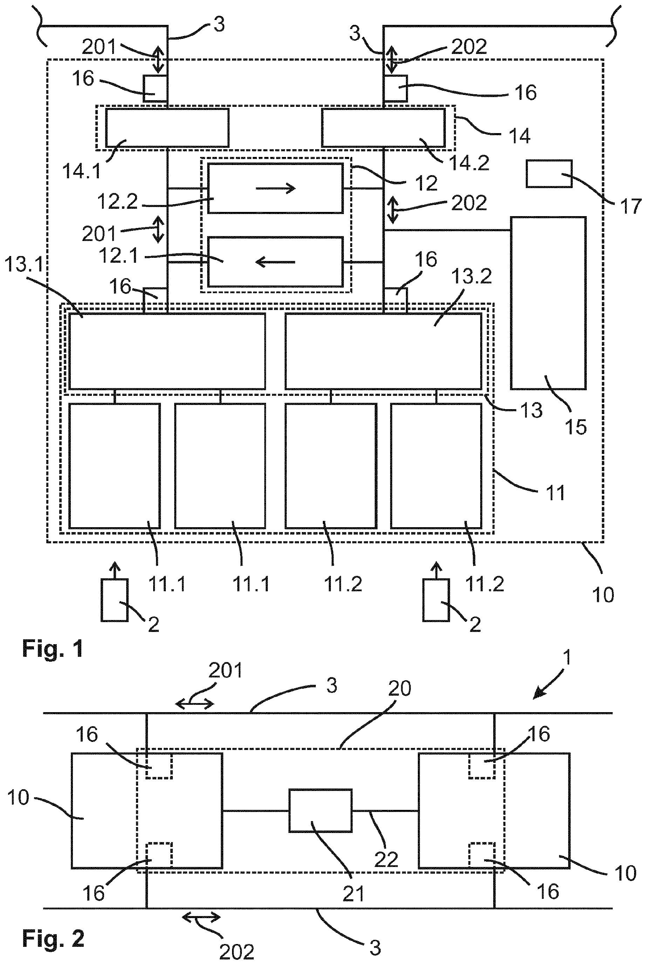

Figur 1 zeigt eine erfindungsgemäße Versorgungsstation 10 zum dezentralen Bereitstellen eines ersten Energielieferanten 201 und eines zweiten Energielieferanten 202 in einem ersten Ausführungsbeispiel. Durch den ersten und zweiten Energielieferanten 201, 202 können mobile Beförderungseinheiten 2 betrieben werden. Bei den mobilen Beförderungseinheiten 2 kann es sich beispielsweise um Fahrzeuge, Fluggeräte und/oder Schiffe handeln. Insbesondere kann ein Teil der durch die Versorgungsstation 10 versorgten mobilen Beförderungseinheiten 2 durch den ersten Energielieferanten 201 betreibbar sein und ein anderer Teil der mobilen Beförderungseinheiten 2 durch den zweiten Energielieferanten 202. Insbesondere kann die Versorgungsstation 10 auch als Tankstelle für die mobilen Beförderungseinheiten 2 bezeichnet werden. Bei dem ersten Energielieferanten 201 handelt es sich vorzugsweise um Wasserstoff und bei dem zweiten Energielieferanten 202 um Strom.

Um die mobilen Beförderungseinheiten 2 mit dem ersten und zweiten Energielieferanten 201, 202 zu versorgen, weist die Versorgungsstation 10 ein Versorgungssystem 11 mit zumindest einer ersten Versorgungseinheit 11.1 zur Bereitstellung des ersten Energielieferanten 201 und mit zumindest einer zweiten Versorgungseinheit 11.2 zur Bereitstellung des zweiten Energielieferanten 202 auf. Insbesondere kann die zweite Versorgungseinheit 11.2 als Ladesäule ausgebildet sein. Die erste Versorgungseinheit 11.1 kann vorteilhafterweise einen Dispenser für Wasserstoff umfassen. Vorzugsweise umfasst das Versorgungssystem 11 mehrere erste und zweite Versorgungseinheiten 11.1, 11.2, um eine Abfertigung mehrerer mobiler Beförderungseinheiten 2 zu beschleunigen.

Um die Versorgungssicherheit des ersten und zweiten Energielieferanten 201, 202 zu erhöhen, umfasst die Versorgungsstation 10 ferner ein mit dem Versorgungssystem 11 verbundenes Umwandlungssystem 12. Das Umwandlungssystem 12 umfasst eine erste Umwandlungseinheit 12.1 zum Erzeugen des ersten Energielieferanten 201 aus dem zweiten Energielieferanten 202. Vorzugsweise umfasst das Umwandlungssystem 12 weiterhin eine zweite Umwandlungseinheit 12.2 zum Erzeugen des zweiten Energielieferanten 202 aus dem ersten Energielieferanten 201. Dadurch kann eine bidirektionale Umwandlung und/oder Transformation des ersten und zweiten Energielieferanten 201, 202 ermöglicht sein. Die erste Umwandlungseinheit 12.1 kann vorteilhafterweise einen Elektrolyseur zur Erzeugung von Wasserstoff umfassen. Die zweite Umwandlungseinheit 12.2 kann beispielsweise eine Brennstoffzelle umfassen.

Um den ersten und zweiten Energielieferanten 201, 202, insbesondere nach dem Umwandeln, zwischenspeichern zu können, umfasst das Versorgungssystem 11 ein Speichersystem 13 mit einer ersten Speichereinheit 13.1, insbesondere in Form eines Wasserstofftanks, zum Speichern des ersten Energielieferanten 201 und einer zweiten Speichereinheit 13.2, insbesondere in Form eines Batteriespeichers, zum Speichern des zweiten Energielieferanten 202.

Um die Versorgungsstation 10 ferner an ein Versorgungsnetzsystem 3 anzubinden, weist die Versorgungsstation 10 ein Verbindungssystem 14 auf. Durch das Versorgungsnetzsystem 3 kann die Versorgungsstation 10 und zumindest ein weiterer Abnehmer mit dem ersten und zweiten Energielieferanten 201, 202 versorgt werden. Beispielsweise kann das Versorgungsnetzsystem 3 ein öffentliches Netz sein. Insbesondere umfasst das Versorgungsnetzsystem 3 mehrere voneinander unabhängige Subnetze. Beispielsweise kann das Versorgungsnetzsystem 3 ein Subnetz zur Verteilung des ersten Energielieferanten 201 in Form eines Pipelinenetzes und ein Subnetz zur Verteilung des zweiten Energielieferanten 202 in Form eines Stromnetzes umfassen. Durch das Verbindungssystem 14 können der erste und zweite Energielieferant 201, 202 aus dem Versorgungsnetzsystem 3 entnommen werden und in das Versorgungsnetzsystem 3 eingespeist werden. Für eine vorteilhafte Einspeisung weist die Verbindungseinheit 14 ferner eine erste und eine zweite Einspeiseeinheit 14.1, 14.2 auf. Beispielsweise kann die erste Einspeiseeinheit 14.1 zur Einspeisung des ersten Energielieferanten 201 in das Versorgungsnetzsystem 3 einen Verdichter umfassen, so dass ein Betriebsdruck des ersten Energielieferanten 201 an einen Betriebsdruck des Versorgungsnetzsystems 3 angepasst werden kann. Die zweite Einspeiseeinheit 14.2 kann einen Transformator zur Einspeisung des zweiten Energielieferanten 202 in das Versorgungsnetzsystem 3 umfassen, um eine Betriebsspannung des zweiten Energielieferanten 202 an eine Betriebsspannung des Versorgungsnetzsystems 3 anzupassen.

Durch die Verbindungseinheit 14 kann somit die Versorgungssicherheit dadurch erhöht werden, dass zumindest einer der Energielieferanten 201, 202 oder beide Energielieferanten 201, 202 der Versorgungsstation 10 zugeführt werden. Durch das Umwandlungssystem 12 ist dabei gleichzeitig sichergestellt, dass ein Ausfall des Versorgungsnetzes 3 zumindest temporär ausgeglichen werden kann, insbesondere wenn ein Bedarf eines der Energielieferanten 201, 202 den Bedarf des jeweils anderen der Energielieferanten 201, 202 übersteigt. Vorzugsweise weist die Versorgungsstation 10 ferner zumindest eine Überwachungseinheit 16 zum Überwachen des Speichersystems 13 und/oder des Versorgungsnetzsystems 3 hinsichtlich einer Verfügbarkeit des ersten und/oder zweiten Energielieferanten 201, 202 auf. Durch die Überwachung des Speichersystems 13 kann frühzeitig ein Ausgleich des Vorrats der Energielieferanten 201, 202 durch das Umwandlungssystem 12 erfolgen. Durch eine Überwachung des Versorgungsnetzsystems 3 kann das Versorgungsnetzsystem 3 stabilisiert werden. Dazu kann vorgesehen sein, dass die Versorgungsstation 10 ein Steuermodul 17 zum Ansteuern des Umwandlungssystems 12 und/oder des Verbindungssystems 14 in Abhängigkeit von der Verfügbarkeit aufweist. Insbesondere können dadurch Lastspitzen und/oder Bedarfsspitzen im Versorgungsnetzsystem 3 abgefangen werden. Je nach Verfügbarkeitszustand im Versorgungsnetzsystem 3 kann entsprechend eine Einspeisung und/oder Entnahme des ersten und/oder zweiten Energielieferanten 201, 202 erfolgen.

Um eine Unabhängigkeit der Versorgungsstation 10 vom Versorgungsnetzsystem 3 zu erhöhen kann ferner ein Generatorsystem 15 vorgesehen sein, welches zum Erzeugen des ersten und/oder zweiten Energielieferanten 201, 202 durch eine Fremdenergie ausgebildet ist. Beispielsweise kann das Generatorsystem 15 eine Windkraftanlage und/oder eine Photovoltaikanlage umfassen. Vorteilhafterweise ist das Generatorsystem 15 mit dem Versorgungssystem 11 und/oder dem Verbindungssystem 14 verbunden.

Figur 2 zeigt eine erfindungsgemäße Stationeninfrastruktur 1. Dabei sind zumindest zwei Versorgungsstationen 10 zum dezentralen Bereitstellen eines ersten und zweiten Energielieferanten 201, 202 vorgesehen, die beispielsweise gemäß dem ersten Ausführungsbeispiel zu Figur 1 ausgebildet sein können. Weiterhin umfasst die Stationeninfrastruktur 1 ein Versorgungsnetzsystem 3 zum Versorgen der Versorgungsstationen 10 mit dem ersten und zweiten Energielieferanten 201, 202. Die Versorgungsstationen 10 sind dabei über eine Datenverbindung 22 miteinander verbunden, um eine Bereitstellung des ersten und zweiten Energielieferanten 201, 202 abzustimmen und/oder über das Versorgungsnetzsystem 3 gegenseitig auszugleichen. Dadurch kann beispielsweise einem überregionalen Bedarf vorteilhaft begegnet werden.

Vorzugsweise umfasst die Stationeninfrastruktur 1 dazu ferner ein Überwachungssystem 20 zum Ermitteln eines Ist-Verfügbarkeitszustandes des ersten und zweiten Energielieferanten 201, 202 für die Versorgungsstationen 10 und das Versorgungsnetzsystem 3. Beispielsweise kann das Überwachungssystem 20 Überwachungseinheiten 16 der Versorgungsstationen 10 umfassen. Weiterhin ist ein Steuersystem 21 zum Bestimmen eines Soll-Verfügbarkeitszustandes für die Versorgungsstationen 10 und für das Versorgungsnetzsystem 3 und zum Ansteuern der Versorgungsstationen 10 zum Herstellen des Soll-Verfügbarkeitszustandes vorgesehen. Das Steuersystem 21 kann in eine zentrale Leitstelle zur Koordinierung der Versorgungsstationen 10 integriert sein. Zusätzlich oder alternativ ist es denkbar, dass das Steuersystem 21 dezentrale Steuermodule 17 der Versorgungsstationen 10 umfasst. Es kann ferner vorgesehen sein, dass das Überwachungssystem 20, vorzugsweise jede der Überwachungseinheiten 16, eine Meteorologieschnittstelle zur Sammlung meteorologischer Informationen und/oder eine Kommunikationsschnittstelle zur Kommunikation mit den mobilen Beförderungseinheiten 2 umfasst, wodurch eine vorausschauende Betriebsweise der Versorgungsstationen 10 ermöglicht sein kann.

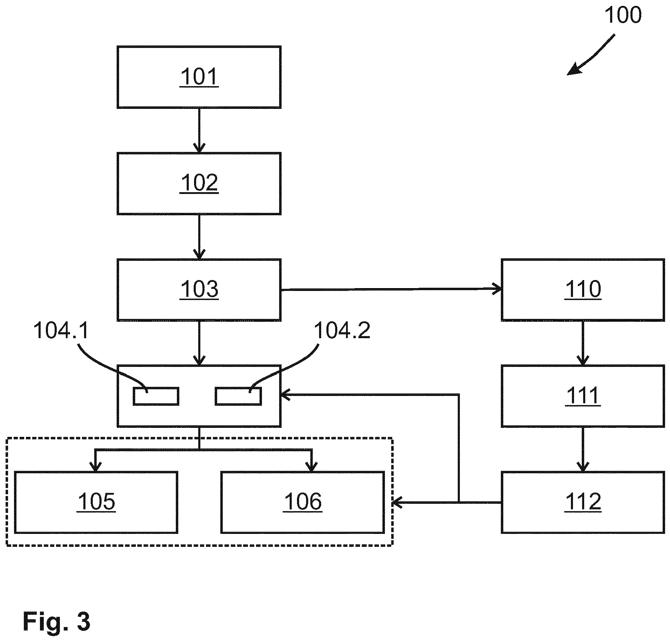

Figur 3 zeigt ein erfindungsgemäßes Verfahren 100 zum Betreiben zumindest einer Versorgungsstation 10, die beispielsweise gemäß dem ersten Ausführungsbeispiel zu Figur 1 ausgebildet sein kann. Dabei erfolgt ein Bereitstellen 101 des ersten Energielieferanten 201 und ein Bereitstellen 102 des zweiten Energielieferanten 202, um mobile Beförderungseinheiten 2 mit dem ersten und zweiten Energielieferanten 201, 202 zu versorgen. Um die Versorgungssicherheit zu erhöhen, ist ferner ein Überwachen 103 eines Speichersystems 13 der Versorgungsstation 10 vorgesehen, in welchem der erste und zweite Energielieferant 201, 202 für das Bereitstellen 101, 102 vorgehalten werden. Insbesondere in Abhängigkeit von einer aus einem Bedarf resultierenden Verfügbarkeit des ersten und zweiten Energielieferanten 201, 202 erfolgt ein Erzeugen 104.1 des ersten Energielieferanten 201 aus dem zweiten Energielieferanten 202. Wenn es sich bei dem zweiten Energielieferanten 202 um Strom und bei dem ersten Energielieferanten 201 um Wasserstoff handelt, kann beispielsweise eine Elektrolyse durchgeführt werden, um den ersten Energielieferanten 201 aus dem zweiten Energielieferanten 202 zu erzeugen. Ferner kann ein Erzeugen 104.1 des zweiten Energielieferanten 202 aus dem ersten Energielieferanten 201, beispielsweise durch Betrieb einer Brennstoffzelle, erfolgen.

In Abhängigkeit von der Verfügbarkeit des ersten und zweiten Energielieferanten 201, 202 kann ferner ein Entnehmen 105 des ersten und/oder zweiten Energielieferanten 201, 202 aus einem Versorgungsnetzsystem 3 und/oder ein Einspeisen 106 des ersten und/oder zweiten Energielieferanten 201, 202 in das Versorgungsnetzsystem 3 erfolgen.

Vorzugsweise kann die Versorgungsstation 10 durch das Verfahren 100 im Rahmen eines Betriebs einer Stationeninfrastruktur 1, insbesondere wie im Ausführungsbeispiel zu Figur 2 dargestellt, betrieben werden. Dabei kann ein Ermitteln 110 eines Ist-Verfügbarkeitszustandes des ersten und zweiten Energielieferanten 201, 202 für die Versorgungsstation 10 und zumindest eine weitere Versorgungsstation 10 sowie für das Versorgungsnetzsystem 3 erfolgen. Ferner kann ein Bestimmen 111 eines Soll-Verfügbarkeitszustandes ausgeführt werden. In Abhängigkeit von einem Vergleich des Ist-Verfügbarkeitszustandes und des Soll-Verfügbarkeitszustandes wird daraufhin ein Ansteuern 112 der Versorgungsstationen 10 zum Herstellen des Soll-Verfügbarkeitszustandes durchgeführt. Dabei können die Versorgungsstationen 10 beispielsweise das Erzeugen 104.1, 104.2, das Entnehmen 105 und/oder das Einspeisen 106 des ersten und/oder zweiten Energielieferanten 201, 202 in Abhängigkeit von dem Ist-Verfügbarkeitszustand und dem Soll-Verfügbarkeitszustand durchführen.

Eine erfindungsgemäße Versorgungsstation 10 kann somit eine Versorgungssicherheit insbesondere in einem regionalen Umkreis und/oder in einem Versorgungsnetzsystem 3 unter Berücksichtigung lokaler Paramater verbessern. Eine erfindungsgemäße Stationeninfrastruktur 1 kann ferner dazu beitragen, dass durch die Verbindung mehrerer Versorgungsstationen 10 zusätzlich eine Versorgungssicherheit in einem überregionalen Umkreis und/oder im Versorgungsnetz 3 unter Berücksichtigung überregionaler Parameter verbessert wird.

Durch eine erfindungsgemäße Versorgungsstation 10 kann somit eine sektorenübergreifende Tankstelle mit einer dynamisch variablen Versorgung "aus einer Hand" entstehen. So kann beispielsweise an der Versorgungsstation 10 gleichzeitig Wasserstoff getankt, Strom geladen und das Stromnetz gestützt werden. Dadurch kann eine klimafreundliche Mobilitätsbereitstellung und über die Wechselwirkung mit einem Versorgungsnetzsystem 3 die Bereitstellung von Wasserstoff für weitere Sektoren wie Industrie und Wärme erreicht werden. Gleichzeitig kann die Versorgungsstation 10 insbesondere einen bedeutenden Baustein für Netz- und Systemdienstleistungen zur Sicherstellung der Versorgungssicherheit darstellen. Es ist ferner denkbar, dass ein Erdgasnetz genutzt wird, um den Wasserstoff einzuspeisen und dadurch ein Ziel-Wasserstoffnetz zu stabilisieren. Beispielsweise können ein Druckbereich eines nachgelagerten Wasserstoffnetzes und/oder die Einspeisegrenzen eines Erdgasnetzes genutzt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Stationeninfrastruktur
- 2: Beförderungseinheiten
- 3: Versorgungsnetzsystem

- 10: Versorgungsstation
- 11: Versorgungssystem
- 11.1: erste Versorgungseinheit
- 11.2: zweite Versorgungseinheit
- 12: Umwandlungssystem
- 12.1: erste Umwandlungseinheit
- 12.2: zweite Umwandlungseinheit
- 13: Speichersystem
- 13.1: erste Speichereinheit
- 13.2: zweite Speichereinheit
- 14: Verbindungssystem
- 14.1: erste Einspeiseeinheit
- 14.2: zweite Einspeiseeinheit
- 15: Generatorsystem
- 16: Überwachungseinheit
- 17: Steuermodul

- 20: Überwachungssystem
- 21: Steuersystem
- 22: Datenverbindung

- 100: Verfahren
- 101: Bereitstellen von 201
- 102: Bereitstellen von 202
- 103: Überwachen
- 104.1: Erzeugen von 201 aus 202
- 104.2: Erzeugen von 202 aus 201
- 105: Entnehmen aus 3
- 106: Einspeisen in 3

- 110: Ermitteln
- 111: Bestimmen
- 112: Ansteuern

- 201: erster Energielieferant
- 202: zweiter Energielieferant

## Patentansprüche

1. Versorgungsstation (10) zum dezentralen Bereitstellen eines ersten und eines zweiten Energielieferanten (201, 202) zum Versorgen von mobilen Beförderungseinheiten (2) für einen Betrieb der mobilen Beförderungseinheiten (2), aufweisend ein Versorgungssystem (11) mit einer ersten Versorgungseinheit (11.1) zur Bereitstellung des ersten Energielieferanten (201) für mobile Beförderungseinheiten (2), und
einer zweiten Versorgungseinheit (11.2) zur Bereitstellung des zweiten Energielieferanten (202) für mobile Beförderungseinheiten (2),
**dadurch gekennzeichnet,**
**dass** die Versorgungsstation (10) ein mit dem Versorgungssystem (11) verbundenes Umwandlungssystem (12) mit einer ersten Umwandlungseinheit (12.1) zum Erzeugen des ersten Energielieferanten (201) aus dem zweiten Energielieferanten (202) aufweist.

2. Versorgungsstation (10) nach Anspruch 1,
**dadurch gekennzeichnet,**
**dass** das Umwandlungssystem (12) eine zweite Umwandlungseinheit (12.2) zum Erzeugen des zweiten Energielieferanten (202) aus dem ersten Energielieferanten (201) aufweist.

3. Versorgungsstation (10) nach Anspruch 1 oder 2,
**dadurch gekennzeichnet,**
**dass** es sich bei dem ersten Energielieferanten (201) um Wasserstoff und bei dem zweiten Energielieferanten (202) um Strom handelt.

4. Versorgungsstation (10) nach einem der vorhergehenden Ansprüche,
**dadurch gekennzeichnet,**
**dass** das Versorgungssystem (11) ein Speichersystem (13) mit einer ersten Speichereinheit (13.1) zum Speichern des ersten Energielieferanten (201) und einer zweiten Speichereinheit (13.2) zum Speichern des zweiten Energielieferanten (202) umfasst.

5. Versorgungsstation (10) nach einem der vorhergehenden Ansprüche,
**dadurch gekennzeichnet,**
**dass** ein Verbindungssystem (14) zur Anbindung der Versorgungsstation (10) an zumindest ein Versorgungsnetzsystem (3) zum Versorgen der Versorgungsstation (10) und zumindest eines weiteren Abnehmers mit dem ersten und/oder zweiten Energielieferanten (201, 202) vorgesehen ist, wodurch der erste und/oder zweite Energielieferant (201, 202) durch die Versorgungsstation (10) aus dem Versorgungsnetzsystem (3) entnehmbar und/oder durch die Versorgungsstation (10) in das Versorgungsnetzsystem (3) einspeisbar ist.

6. Versorgungsstation (10) nach einem der vorhergehenden Ansprüche,
**dadurch gekennzeichnet,**
**dass** das Verbindungssystem (14) zumindest eine Einspeiseeinheit (14.1, 14.2) zur Anpassung eines Betriebsparameters des ersten und/oder zweiten Energielieferanten (201, 202) zur Einspeisung des ersten und/oder zweiten Energielieferanten (201, 202) in das Versorgungsnetzsystem (3) aufweist.

7. Versorgungsstation (10) nach einem der vorhergehenden Ansprüche,
**dadurch gekennzeichnet,**
**dass** ein Generatorsystem (15) zum Erzeugen des ersten und/oder zweiten Energielieferanten (201, 202) durch eine Fremdenergie vorgesehen ist, wobei das Generatorsystem (15) mit dem Versorgungssystem (11), insbesondere dem Speichersystem (13), und/oder dem Verbindungssystem (14) verbunden ist.

8. Versorgungsstation (10) nach einem der vorhergehenden Ansprüche,
**dadurch gekennzeichnet,**
**dass** eine Überwachungseinheit (16) zum Überwachen des Speichersystems (13) und/oder des Versorgungsnetzsystems (3) hinsichtlich einer Verfügbarkeit des ersten und/oder zweiten Energielieferanten (201, 202) vorgesehen ist, insbesondere wobei die Versorgungsstation (10) ein Steuermodul (17) zum Ansteuern des Umwandlungssystems (12) und/oder des Verbindungssystems (14) in Abhängigkeit von der Verfügbarkeit aufweist.

9. Stationeninfrastruktur (1) aufweisend
zumindest zwei Versorgungsstationen (10) nach einem der vorhergehenden Ansprüche zum dezentralen Bereitstellen eines ersten und eines zweiten Energielieferanten (201, 202), und
zumindest ein Versorgungsnetzsystem (3) zum Versorgen der Versorgungsstationen (10) mit dem ersten und/oder zweiten Energielieferanten (201, 202),
wobei die Versorgungsstationen (10) über eine Datenverbindung (22) zur Abstimmung einer Bereitstellung des ersten und zweiten Energielieferanten (201, 202) miteinander verbunden sind.

10. Stationeninfrastruktur (1) nach Anspruch 9,
**dadurch gekennzeichnet,**
**dass** die Stationeninfrastruktur (1) ein Überwachungssystem (20) zum Ermitteln (110) eines Ist-Verfügbarkeitszustandes des ersten und zweiten Energielieferanten (201, 202) für die Versorgungsstationen (10) und für das Versorgungsnetzsystem (3), und
ein Steuersystem (21) zum Bestimmen (111) eines Soll-Verfügbarkeitszustandes für die Versorgungsstationen (10) und für das Versorgungsnetzsystem (3) und zum Ansteuern (112) der Versorgungsstationen (10) zum Herstellen des Soll-Verfügbarkeitszustandes aufweist.

11. Verfahren (100) zum Betreiben zumindest einer Versorgungsstation (10), insbesondere nach einem der vorhergehenden Ansprüche, zum dezentralen Bereitstellen eines ersten und eines zweiten Energielieferanten (201, 202) zum Versorgen von mobilen Beförderungseinheiten (2) für einen Betrieb der mobilen Beförderungseinheiten (2), wobei durch die Versorgungsstation (10) folgende Schritte ausgeführt werden:
- Bereitstellen (101) des ersten Energielieferanten (201) für mobile Beförderungseinheiten (2),
- Bereitstellen (102) des zweiten Energielieferanten (202) für mobile Beförderungseinheiten (2),
- Erzeugen (104.1) des ersten Energielieferanten (201) aus dem zweiten Energielieferanten (202).

12. Verfahren (100) nach Anspruch 11,
**dadurch gekennzeichnet,**
**dass** der erste und/oder zweite Energielieferant (201, 202) zum Bereitstellen (101, 102) durch die Versorgungsstation (10) in einem Speichersystem (13) der Versorgungsstation (10) vorgehalten wird.

13. Verfahren (100) nach Anspruch 11 oder 12,
**dadurch gekennzeichnet,**
**dass** die Versorgungsstation (10) mit zumindest einem Versorgungsnetzsystem (3) zum Versorgen der Versorgungsstation (10) und zumindest eines weiteren Abnehmers mit dem ersten und/oder zweiten Energielieferanten (201, 202) verbunden ist, wobei das Verfahren (100) zumindest einen der folgenden Schritte umfasst:
- Entnehmen (105) des ersten und/oder zweiten Energielieferanten (201, 202) aus dem Versorgungsnetzsystem (3),
- Einspeisen (106) des ersten und/oder zweiten Energielieferanten (201, 202) in das Versorgungsnetzsystem (3).

14. Verfahren (100) nach einem der vorhergehenden Ansprüche,
**dadurch gekennzeichnet,**
**dass** das Verfahren (100) folgenden Schritt umfasst:
- Überwachen (103) des Speichersystems (13) der Versorgungsstation (10) und/oder des Versorgungsnetzsystems (3) hinsichtlich einer Verfügbarkeit des ersten und/oder zweiten Energielieferanten (201, 202),
wobei das Erzeugen (104.1) des ersten Energielieferanten (201) aus dem zweiten Energielieferanten (202) in Abhängigkeit von der Verfügbarkeit erfolgt.

15. Verfahren (100) nach einem der vorhergehenden Ansprüche,
**dadurch gekennzeichnet,**
**dass** die Versorgungsstation (10) als Teil einer das Versorgungsnetzsystem (3) und zumindest eine weitere Versorgungsstation (10) umfassenden Stationeninfrastruktur (1), insbesondere nach einem der Ansprüche 9 oder 10, mit der weiteren Versorgungsstation (10) über eine Datenverbindung (22) zur Abstimmung einer Bereitstellung des ersten und zweiten Energielieferanten (201, 202) verbunden ist, insbesondere wobei das Verfahren (100) folgende Schritte umfasst:
- Ermitteln (110) eines Ist-Verfügbarkeitszustandes des ersten und zweiten Energielieferanten (201, 202) für die Versorgungsstationen (10) und für das Versorgungsnetzsystem (3),
- Bestimmen (111) eines Soll-Verfügbarkeitszustandes für die Versorgungsstationen (10) und für das Versorgungsnetzsystem (3),
- Ansteuern (112) der Versorgungsstationen (10) zum Herstellen des Soll-Verfügbarkeitszustandes.
